# EUROPÄISCHE PATENTANMELDUNG

(11) **EP 1 270 895 A1**
(43) Veröffentlichungstag der Anmeldung: **02.01.2003**
(21) Anmeldenummer: 01115872.2
(22) Anmeldetag: 29.06.2001
(51) Int. Cl.: F02B 29/04

(54) **Ladelufttemperaturkontrolle für Motoren mit Ladeluftkühler**

(71) Anmelder: Ford Global Technologies, Inc., A subsidiary of Ford Motor Company, Dearborn, Michigan 48126 (US)
(72) Erfinder: Tobergte, Michael, 50767 Köln (DE); Grieser, Klemens, 40764 Langenfled (DE); Schneider, Franz-Josef, 50129 Bergheim (DE); Borrmann, Dirk, 50354 Huerth (DE)
(74) Vertreter: Drömer, Hans-Carsten, Dipl.-Ing.

(57) **Zusammenfassung**

Die Erfindung betrifft ein Verfahren zur Kühlung der Ladeluft (5) einer Brennkraftmaschine. Dabei ist der Ladeluftkühler (4) in einem Kühlmittelkreislauf mit einer Pumpe (1) und einem Wärmetauscher (2, 3) angeordnet. Die Temperatur der Ladeluft wird über einen Temperatursensor (7) erfasst und einer Regelungseinheit (8) mitgeteilt. In Abhängigkeit von dieser Temperatur und gegebenenfalls weiteren Motorbetriebsparametern steuert die Regelungseinheit (8) die Pumpe (1) und gegebenenfalls das Gebläse (3) des Wärmetauschers. So kann insbesondere bei einem Kaltstart des Motors oder bei Teillast durch Abschalten beziehungsweise Drosseln der Pumpe (1) und/oder des Gebläses (3) eine höhere Ladelufttemperatur zugelassen werden. Dadurch wird nicht nur eine bessere Anpassung der Ladelufttemperatur an den Motorbetrieb erreicht, sondern auch Energie für den Betrieb der Pumpe (1) beziehungsweise des Gebläses (3) gespart.

## Beschreibung

Die Erfindung betrifft ein Verfahren zur Regelung der Temperatur der Ladeluft in einer Brennkraftmaschine mit einem Ladeluftkühler, wobei der Ladeluftkühler zusammen mit einer Kühlmittelpumpe und einem Wärmetauscher in einem Kühlmittelkreislauf angeordnet ist. Ferner betrifft die Erfindung eine Ladeluft-Kühlungsanordnung für eine Brennkraftmaschine enthaltend
- einen Ladeluftkühler, durch welchen die zu kühlende Ladeluft geleitet wird;
- einen Kühlmittelkreislauf enthaltend den Ladeluftkühler, eine Kühlmittelpumpe sowie einen Wärmetauscher;
- einen Temperatursensor, welcher im Strömungsweg der Ladeluft angeordnet ist.

Zur Steigerung der Leistung von Brennkraftmaschinen ist es bekannt, die der Brennkraftmaschine zugeführte Luft ("Ladeluft") vor ihrer Mischung mit dem Kraftstoff zu verdichten. Die bei dieser Verdichtung der Ladeluft auftretende Erwärmung ist jedoch in der Regel unerwünscht, so dass die Temperatur mit Hilfe eines Ladeluftkühlers wieder auf ein gewünschtes Niveau abgesenkt wird. Der Ladeluftkühler oder Zwischenkühler ist bei bekannten Systemen in der Regel in einen Kühlwasserkreislauf eingebunden, wobei das Kühlwasser ständig mit einer elektrischen Pumpe umgepumpt wird. Ein Wärmeentzug aus dem umgepumpten Kühlwasser erfolgt in der Regel mittels eines Wärmetauschers, welcher mit Umgebungsluft gekühlt wird. Nachteilig bei diesen bekannten Verfahren ist, dass die Kühlwasserpumpe ständig in Betrieb ist, was einen entsprechenden Stromverbrauch mit sich bringt. Ferner zeigt es sich, dass die Kühlung der Ladeluft nicht für jeden Betriebszustand des Motors optimal ist.

Um die Kühlung der Ladeluft abhängig von der Temperatur der Ladeluft vornehmen zu können, ist es aus der US 5 632 256, der US 5 669 363, der WO 92/01145 und der EP 0 708 231 bekannt, die Ladeluft über einen regelbaren Bypass am Zwischenkühler vorbei und direkt in den Motor zu leiten. Nachteilig hieran ist jedoch, dass der Aufwand für die Kühlung des Ladeluftkühlers unvermindert bestehen bleibt.

Des weiteren ist es aus der US 5 201 285 bekannt, den Ladeluftkühler in einem Nebenstrom des Kühlmittelkreislaufes der Brennkraftmaschine anzuordnen. Dabei wird die Temperatur der Ladeluft gemessen und in Abhängigkeit hiervon mehr oder weniger Kühlmittel durch den Ladeluftkühler geleitet. Ferner wird die Geschwindigkeit eines Wärmetauschergebläses in Abhängigkeit von der Umgebungsluft des Fahrzeuges kontrolliert. Nachteilig bei diesem System ist, dass ein verhältnismäßig großer Aufwand erforderlich ist und dass die Kühlung der Brennkraftmaschine nicht unabhängig von der Ladeluftkühlung ist.

Vor diesem Hintergrund war es Aufgabe der vorliegenden Erfindung, eine Vorrichtung und ein Verfahren zur Regelung der Temperatur der Ladeluft einer Brennkraftmaschine zu schaffen, welche bzw. welches eine bessere Energieausnutzung und einen besser angepassten Betrieb des Motors ermöglicht.

Diese Aufgabe wird durch ein Verfahren mit den Merkmalen des Anspruchs 1 und eine Ladeluft-Kühlungsanordnung mit den Merkmalen des Anspruchs 5 gelöst. Vorteilhafte Ausgestaltungen sind in den Unteransprüchen enthalten.

Das erfindungsgemäße Verfahren dient der Regelung der Temperatur der Ladeluft in einer Brennkraftmaschine mit Ladeluftkühler, wobei der Ladeluftkühler gemeinsam mit einer Kühlmittelpumpe und einem Wärmetauscher in einem Kühlmittelkreislauf angeordnet ist. Das Verfahren ist dadurch gekennzeichnet, dass die Temperatur der Ladeluft gemessen und in Abhängigkeit hiervon die Kühlmittelpumpe des Kühlmittelkreislaufes gesteuert wird.

Anders als bei den bekannten Verfahren läuft somit die Kühlmittelpumpe des Kühlmittelkreislaufes nicht ungeregelt und ununterbrochen durch, sondern sie wird nach Bedarf in Abhängigkeit von der Temperatur der Ladeluft ein- und ausgeschaltet beziehungsweise gedrosselt. Dies spart nicht nur Energie für den Betrieb der Pumpe, sondern gewährleistet zugleich, dass sich die Temperatur der Ladeluft durchgehend in einem gewünschten und optimalen Bereich befindet.

Gemäß einer Weiterbildung des Verfahrens erfolgt die Steuerung der Kühlmittelpumpe nicht nur in Abhängigkeit von der Ladelufttemperatur, sondern auch in Abhängigkeit von weiteren Betriebsparametern der Brennkraftmaschine. Hierzu kann insbesondere die Last und/oder die Drehzahl der Brennkraftmaschine gehören. Vorzugsweise wird dabei die Kühlmittelpumpe nach einem Motorstart und/oder bei mittlerer Motorlast gedrosselt betrieben oder sogar ganz ausgeschaltet. Auf diese Weise wird erreicht, dass die Temperatur der Ladeluft gegenüber einer ungedrosselten Kühlung höhere Werte annimmt, was bei einem Motorkaltstart zu einer schnelleren Erwärmung des Motors beiträgt. Bei Teillasten wird durch eine verhältnismäßig hohe Ladelufttemperatur die Kraftstoffausnutzung verbessert. Bei hoher Last der Brennkraftmaschine oder bei hohen Umgebungstemperaturen wird dagegen die Kühlmittelpumpe vorzugsweise mit maximaler Leistung betrieben, um möglichst niedrige Ladelufttemperaturen zur Optimierung der Leistungsabgabe zu erzielen.

Weiterhin kann auch der Wärmetransfer des Wärmetauschers im Kühlmittelkreislauf in Abhängigkeit von der Temperatur der Ladeluft und gegebenenfalls in Abhängigkeit von weiteren Betriebsparametern der Brennkraftmaschine verändert werden, um hierdurch die Ladelufttemperatur zu beeinflussen. Gegenüber einem ungeregelten Betrieb hat dies wiederum den Vorteil, dass die Ladelufttemperatur durchgehend in einem optimalen Bereich gehalten werden kann.

Wenn dabei im Wärmetauscher eine Wärmeabgabe an die Umgebungsluft erfolgt und der Wärmetauscher zu diesem Zweck mit einem Gebläse versehen ist, wird vorzugsweise die Drehzahl beziehungsweise Leistung des Gebläses in Abhängigkeit von der Temperatur der Ladeluft und/oder von Betriebsparametern der Brennkraftmaschine geregelt. Eine hohe Drehzahl beziehungsweise Leistung des Gebläses führt zu einem höheren Wärmetransfer des Wärmetauschers und folglich zu einer Absenkung der Temperatur der Ladeluft. Ein gedrosselter Gebläsebetrieb bei einem geringeren Bedarf an Kühlleistung hat hier wiederum den Vorteil, dass Strom für den Betrieb des Gebläses eingespart werden kann.

Die Erfindung betrifft ferner eine Ladeluft-Kühlungsanordnung für eine Brennkraftmaschine, welche die folgenden Elemente enthält: einen Ladeluftkühler, durch welchen die zu kühlende Ladeluft geleitet werden kann; einen Kühlmittelkreislauf, welcher den Ladeluftkühler, eine Kühlmittelpumpe sowie einen Wärmetauscher umfasst; und einen Temperatursensor, der im Strömungsweg der Ladeluft angeordnet ist. Die Ladeluft-Kühlungsanordnung ist gekennzeichnet durch eine Regelungseinheit, welche mit dem Temperatursensor, der Kühlmittelpumpe und gegebenenfalls dem Wärmetauscher gekoppelt und darüber hinaus derart eingerichtet ist, dass diese ein Verfahren der vorstehend erläuterten Art durchführen kann. Die Regelung ist somit insbesondere im Stande, in Abhängigkeit von der gemessenen Temperatur der Ladeluft die Kühlmittelpumpe des Kühlmittelkreislaufes zu steuern. Sofern die Regelung mit dem Wärmetauscher verbunden ist, kann diese darüber hinaus auch Einfluss auf den Wärmetransfer des Wärmetauschers nehmen.

Vorzugsweise enthält der Wärmetauscher ein Gebläse zur zwangsweisen Zuführung von Umgebungsluft, wobei die Regelung Einfluss auf die Drehzahl und Leistung dieses Gebläses nehmen kann.

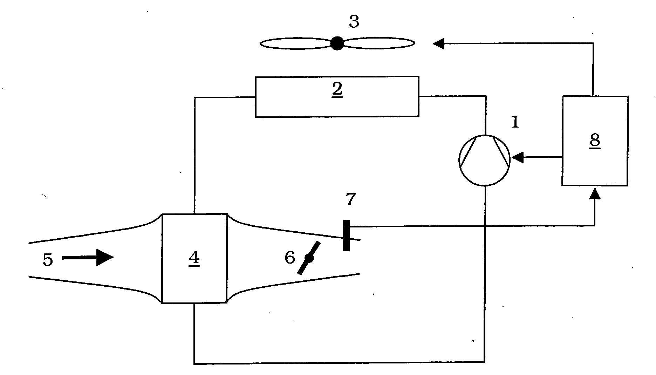

Im Folgenden wird die Erfindung anhand der Figur beispielhaft näher erläutert.

Die einzige Figur zeigt schematisch die Komponenten einer Ladeluft-Kühlungsanordnung gemäß der vorliegenden Erfindung.

Die für den Verbrennungsvorgang in einer Brennkraftmaschine (nicht dargestellt) vorgesehene, vorzugsweise komprimierte Ladeluft 5 durchläuft einen Ladeluftkühler 4 ("Intercooler") in der durch den Pfeil angedeuteten Richtung, wobei die durch die Kompression der Ladeluft entstehende Temperaturerhöhung im Ladeluftkühler 4 wieder abgebaut werden soll. An der Ausgangsseite des Ladeluftkühlers 4 befindet sich eine Drosselklappe 6 im Ladeluftstrom, mit welcher die Größe dieses Stromes beeinflusst werden kann. Ferner befindet sich im Ladeluftstrom ein Temperatursensor 7 zur Erfassung der Temperatur der Ladeluft.

Im Ladeluftkühler 4 erfolgt ein Wärmetransfer von der Ladeluft auf ein Kühlmittel wie insbesondere Wasser. Dieses wird in einem separaten, von der Motorkühlung unabhängigen Kühlmittelkreislauf umgepumpt, an dem der Ladeluftkühler 4, eine Pumpe 1 sowie ein Wärmetauscher 2 angeschlossen sind. Im Wärmetauscher 2 wird die vom Kühlmittel aufgenommene Wärme an die Umgebungsluft abgegeben. Der Wärmetauscher 2 kann zusätzlich von einem Gebläse 3 mit Umgebungsluft angeblasen werden, um einen gesteigerten Wärmetransfer zu erzielen.

Während bei bekannten Ladeluft-Kühlungsanordnungen die Wasserpumpe 1 auf konstantem Niveau betrieben wird und somit durchgehend eine maximale Kühlung der Ladeluft 5 stattfindet, wird erfindungsgemäß der Einsatz einer Regelungseinheit 8 vorgeschlagen. Die Regelungseinheit 8 ist mit dem Temperatursensor 7 verbunden, um von diesem ein die Ladelufttemperatur anzeigendes Signal zu erhalten. Gegebenenfalls kann die Regelungseinheit 8 weitere sensorische Eingänge oder Dateneingänge aufweisen (nicht dargestellt), um noch andere Betriebsparameter der Brennkraftmaschine zu erfassen.

Ausgangsseitig ist die Regelungseinheit 8 mit der Wasserpumpe 1 sowie dem Gebläse 3 verbunden. Über diese Ausgänge kann die Regelungseinheit 8 die Leistung der Wasserpumpe 1 und des Gebläses 3 variieren beziehungsweise diese Elemente ganz abstellen. Wenn die Regelungseinheit 8 etwa feststellt, dass die Ladelufttemperatur sich bereits auf einem gewünschten (niedrigen) Niveau befindet, kann sie durch eine Drosselung der Kühlung einerseits Strom sparen und andererseits sicherstellen, dass die Ladelufttemperatur nicht unter das gewünschte Niveau absinkt.

Weiterhin kann die Regelungseinheit 8 dafür sorgen, dass die Ladelufttemperatur verschiedenen Betriebsbedingungen der Brennkraftmaschine optimal angepasst ist. So kann insbesondere nach einem Motorstart und während des Aufwärmens des Motors die Ladelufttemperatur auf einen verhältnismäßig hohen Wert geregelt werden, um ein schnelles Aufwärmen der Brennkraftmaschine zu unterstützen. Gegebenenfalls können zu diesem Zweck auch Heizeinrichtungen (z.B. im Kühlmittelkreislauf) vorgesehen werden, so dass im Ladeluftkühler 4 entgegen dem üblichen Betrieb eine Erhöhung der Temperatur der Ladeluft 5 stattfinden kann.

Bei Teillast der Brennkraftmaschine ist es ebenfalls von Vorteil, im Hinblick auf eine verhältnismäßig hohe Ladelufttemperatur zu regeln, um die Kraftstoffausnutzung zu verbessern.

Bei hoher Last oder bei hohen Umgebungstemperaturen ist es dagegen wünschenswert, die Ladelufttemperatur auf ein niedriges Niveau herunter zu regeln, um die Leistungsabgabe zu optimieren.

Mit der vorgeschlagenen Ladeluft-Kühlungsanordnung wird somit sowohl eine Stromersparnis beim Betrieb der Wasserpumpe 1 beziehungsweise des Gebläses 3 als auch eine bessere Anpassung der Ladelufttemperatur an den Motorbetriebszustand erzielt.

## Patentansprüche

1. Verfahren zur Regelung der Temperatur der Ladeluft (5) in einer Brennkraftmaschine mit einem Ladeluftkühler (4), wobei der Ladeluftkühler zusammen mit einer Kühlmittelpumpe (1) und einem Wärmetauscher (2, 3) in einem Kühlmittelkreislauf angeordnet ist,
**dadurch gekennzeichnet, dass** die Temperatur der Ladeluft (5) gemessen und in Abhängigkeit hiervon die Kühlmittelpumpe (1) des Kühlmittelkreislaufes gesteuert wird.

2. Verfahren nach Anspruch 1,
**dadurch gekennzeichnet, dass** die Steuerung der Kühlmittelpumpe (1) in Abhängigkeit von weiteren Betriebsparametern der Brennkraftmaschine erfolgt, wobei vorzugsweise die Kühlmittelpumpe (1) nach einem Motorstart und/oder bei mittlerer Motorlast ausgeschaltet oder gedrosselt wird.

3. Verfahren nach einem der Ansprüche 1 oder 2,
**dadurch gekennzeichnet, dass** der Wärmetransfer des Wärmetauschers (2, 3) in Abhängigkeit von der Temperatur der Ladeluft (5) und gegebenenfalls von weiteren Betriebsparametern der Brennkraftmaschine verändert wird.

4. Verfahren nach Anspruch 3,
**dadurch gekennzeichnet, dass** das Gebläse (3) eines luftgekühlten Wärmetauschers (2, 3) geregelt wird.

5. Ladeluft-Kühlungsanordnung für eine Brennkraftmaschine, enthaltend:
- einen Ladeluftkühler (4), durch welchen die zu kühlende Ladeluft (5) geleitet wird;
- einen Kühlmittelkreislauf enthaltend den Ladeluftkühler (4), eine Kühlmittelpumpe (1), sowie einen Wärmetauscher (2, 3);
- einen Temperatursensor (7), welcher im Strömungsweg der Ladeluft (5) angeordnet ist;
**gekennzeichnet durch** eine Regelung (8), welche an den Temperatursensor (7), die Kühlmittelpumpe (1) und gegebenenfalls den Wärmetauscher (2, 3) gekoppelt und derartig eingerichtet ist, dass diese ein Verfahren nach einem der Ansprüche 1 bis 4 ausführen kann.

6. Ladeluft-Kühlungsanordnung nach Anspruch 5,
**dadurch gekennzeichnet, dass** der Wärmetauscher (2) ein Gebläse (3) zur Kühlung mit Umgebungsluft umfasst.
